# EUROPÄISCHE PATENTSCHRIFT

(11) **EP 2 391 438 B1**
(45) Veröffentlichungstag und Bekanntmachung des Hinweises auf die Patenterteilung: **30.01.2013**
(21) Anmeldenummer: 09748105.5
(22) Anmeldetag: 03.11.2009
(51) Int. Cl.: B01D 53/26, B60G 17/052

(54) **VERFAHREN ZUM STEUERN DER REGENERATIONSZYKLEN FÜR EINEN LUFTTROCKNER IN EINER GESCHLOSSENEN NIVEAUREGELANLAGE FÜR FAHRZEUGE**
METHOD FOR CONTROLLING THE REGENERATION CYCLES FOR AN AIR DRYER IN A CLOSED RIDE CONTROL SYSTEM FOR VEHICLES
PROCÉDÉ DE COMMANDE DES CYCLES DE RÉGÉNÉRATION POUR UN SÉCHEUR D'AIR DANS UN SYSTÈME FERMÉ RÉGULATEUR DE NIVEAU POUR VÉHICULES

(30) Priorität: 28.01.2009 DE 102009003396
(43) Veröffentlichungstag der Anmeldung: 07.12.2011
(73) Patentinhaber: Continental Teves AG & Co. OHG, 60488 Frankfurt (DE)
(72) Erfinder: HEIN, Dirk, 30900 Wedemark (DE); FOLCHERT, Uwe, 31867 Lauenau (DE); WITALA, Christian, 30175 Hannover (DE); ILIAS, Heike, 30900 Wedemark (DE)
(86) Internationale Anmeldenummer: PCT/EP2009/064478
(87) Internationale Veröffentlichungsnummer: WO 2010/086038

(56) Entgegenhaltungen:
- EP-A- 1 243 447
- EP-A2- 2 080 914
- DE-A1- 19 515 895

## Beschreibung

Die Erfindung betrifft gemäß dem Oberbegriff des Anspruchs 1 ein Verfahren zum Steuern der Regenerationszyklen für einen Lufttrockner in einer geschlossenen Niveauregelanlage für Fahrzeuge, durch die ein Fahrzeugaufbau gegenüber mindestens einer Fahrzeugachse abgefedert ist.

Eine geschlossene Niveauregelanlage für Fahrzeuge der eingangs genannten Art ist aus der europäischen Patentanmeldung EP 1 243 447 A2 und dem deutschen Patent DE 102 31 251 C1 bekannt. Die aus diesen Druckschriften bekannte, geschlossene Niveauregelanlage weist zwei oder vier steuerbare Wegeventile, einen Druckmittelvorratsbehälter und mindestens zwei Druckmittelkammern mit jeweils einem steuerbaren Wegeventil auf. Mit dieser Niveauregelanlage lässt sich Druckmittel aus den Druckmittelkammem in den Druckmittelvorratsbehälter und umgekehrt überführen. Weiterhin lässt sich Luft aus der Atmosphäre in den Druckmittelvorratsbehälter überführen, wobei die verdichtete Luft vor dem Eintritt in den Druckmittelvorratsbehälter in einem Lufttrockner getrocknet wird. Zur Regeneration des Lufttrockners lässt sich Druckmittel aus dem Druckmittelvorratsbehälter über eine Drossel entspannt und im Vergleich zur Lufttrocknung in entgegengesetzter Richtung durch den Lufttrockner über ein Ablassventil zur Atmosphäre führen. Bei der in der EP 1 243 447 A2 beschriebenen Ausführungsform wird die Luft aus der Atmosphäre über ein Wegeventil angesaugt und über dasselbe Wegeventil zum Regenerieren des Lufttrockners entlüftet. Die Ausführungsform gemäß der DE 102 31 251 C1 weist demgegenüber eine zusätzliche, mit dem Kompressor verbundene Luftansaugleitung auf, so dass nur das Entlüften über das Wegeventil und die bereits erwähnte Druckluftleitung erfolgt.

Pneumatische Niveauregelanlagen benötigen trockene Luft im System, damit die Systemkomponenten nicht einfrieren und in ihrer Funktion beeinträchtigt werden. Dazu wird ein Taupunkt angestrebt, der dieses verhindert.

Bei offenen Niveauregelsystemen und anderen pneumatischen Systemen, insbesondere Fahrzeugbremsanlagen, lässt sich die in das System geförderte Luft abzüglich einer Leckage wieder zum Regenerieren des Trockners verwenden, so dass nahezu 100 % der Förderluft zur Regeneration zur Verfügung steht und ausreichende Taupunkte erreichbar sind.

Sowohl bei offenen als auch bei geschlossenen pneumatischen Systemen kann das Regenerieren nur dann erfolgen, wenn der Kompressor keine Druckluft in das System fördert. Da in offenen Systemen ein höherer Druckluftverbrauch als in geschlossenen Systemen gegeben ist, läuft der Kompressor in offenen Systemen häufiger und länger, und es ist wichtig, die Regenerationszyklen mit den Zeiten in Einklang zu bringen, während derer der Kompressor keine Druckluft fördert.

Zu diesem Zweck ist aus der DE 31 39 682 C2 eine Lufttrocknungseinrichtung für eine offene Druckluftanlage bekannt, die ein oder zwei Feuchtigkeitssensoren, die vor und/oder hinter dem Lufttrockner angeordnet sind, und einen Luftmassenmesser aufweist. Das Regenerieren des Lufttrockners wird durch einen Drucksensor jedes Mal ausgelöst, wenn in einem Druckluftvorratsbehälter ein voreingestellter Solldruck erreicht ist. Die Regenerierungszeitdauer wird abhängig von der Luftfeuchtigkeit vor und/oder hinter dem Lufttrockner eingestellt.

Aus der EP 0 093 253 B2 ist eine Steuereinrichtung zur Regenerierung eines Lufttrockners für eine pneumatische Anlage, insbesondere einer Fahrzeugbremsanlage, bekannt, gemäß der dem Lufttrockner im Leerlaufbetrieb des Kompressors jeweils eine Regenerierungsluftmasse zum Trocknen angeboten wird, die im Wesentlichen proportional zu der im vorangegangenen Förderbetrieb des Kompressors durch den Lufttrockner durchgeleiteten Förderluftniasse ist. Sofern die Zeitspanne zwischen zwei Förderzyklen des Kompressors zu kurz ist, um die erforderliche Regenerierungsluftmenge durch den Lufttrockner strömen zu lassen, sind Vorkehrungen getroffen, dass der Fehlbetrag an Regenerierungsluftmenge späteren Regenerierungszyklen zugeschlagen wird, um die optimale Trocknung des Lufttrockners bei einem erstbesten längeren Leerlaufzyklus des Kompressors nachholen zu können. Da der Wirkungsgrad der Trocknung des Lufttrockners bei niedrigeren Temperaturen geringer ist als bei höheren Temperaturen, ist ein Temperaturmesser vorhanden, der ein Korrektursignal an die Steuereinrichtung abgibt, so dass die jeweils ermittelte Regenerierungsluftmenge zusätzlich zur Förderleistung des Kompressors auch noch von der gemessenen Außentemperatur abhängt.

Gemäß einer weiteren Druckluftanlage, die in der EP 0 523 194 B1 (DE 690 13 167 T2) beschrieben ist, ist ein Feuchtigkeitssensor vorhanden, der die Feuchtigkeit der Druckluft in der Anlage feststellt und ein Regenerierungssteuersignal und ein Kompressorsteuersignal erzeugt, um die Luftförderung durch den Kompressor zu unterbrechen und den Lufttrockner zu regenerieren, wenn die Feuchtigkeit der Druckluft in der Anlage einen vorbestimmten Wert übersteigt, was ein Anzeichen dafür ist, dass der Lufttrockner mit Feuchtigkeit gesättigt ist.

Aus der DE 196 20 851 A1 ist eine Luftaufbereitungsanordnung für Druckluft, insbesondere für pneumatische Bremsanlagen von Kraftfahrzeugen, bekannt, die eine Messeinrichtung für die durch den Lufttrockner hindurch geförderte Luftmenge aufweist. Eine elektronische Steuerung bestimmt aus dem so ermittelten Luftvolumen den Zeitpunkt für das Regenerieren des Lufttrockners und das Volumen der zum Regenerieren benötigten Regenerationsluft. Ein Regenerieren erfolgt somit nur dann, wenn eine vorbestimmte Luftmenge durch den Lufttrockner geflossen ist. Die für das Regenerieren aufgewandte Luftmenge hängt von der erstgenannten Luftmenge ab. Die Regenerationsluft wird unmittelbar aus dem Drucksystem entnommen.

Ein aus der EP 1 173 270 B1 bekanntes Verfahren zum Regenerieren von Lufttrocknern beruht darauf, dass das Volumen der Trocknerregenerationsluft, die zum Regenerieren des Lufttrockners erforderlich ist, in der Weise bestimmt wird, dass der Systemdruck, die Außentemperatur und das zugeführte Luftvolumen gemessen und kontinuierlich einem Steuergerät zugeleitet werden, das in Bezug auf diese Parameter die Regenerationszeit und die Zufuhr der Regenerierungsluft zu dem Lufttrockner steuert.

Mit den aus diesem Stand der Technik bekannten Systemen und Verfahren sollen optimierte Regenerationszyklen generiert werden, die aber nicht ohne weiteres auf geschlossene pneumatische Systeme, insbesondere pneumatische Niveauregelanlagen, übertragbar sind, da bei geschlossenen Systemen nur anteilig Förderluft abgelassen werden darf, während systembedingt stets Druckluft im System verbleiben muss und trotzdem ein ausreichender Taupunkt sichergestellt sein soll.

Dementsprechend liegt der Erfindung die Aufgabe zugrunde, mit einer möglichst geringen Regenerationsluftmenge einen Taupunkt im System zu erreichen, der das Einfrieren von Systemkomponenten verhindert und eine maximale Luftmenge im System belässt.

Diese Aufgabe wird erfindungsgemäß durch die Merkmale des Anspruchs 1 gelöst. Bei dem Verfahren gemäß dem Oberbegriff des Anspruchs 1 wird erfindungsgemäß die Druckluftmenge, die mittels des Kompressors durch den Lufttrockner gefördert wird, gemessen, ebenso die Temperatur und/oder die Feuchtigkeit der aus der Atmosphäre angesaugten Luft, und es wird immer so viel Druckluft durch den Trockner geleitet, dass dieser unter der Annahme, dass die Luft mit der höchst möglichen Umgebungstemperatur und Feuchtigkeit durch den Kompressor angesaugt und durch den Lufttrockner gefördert wird, als gesättigt anzusehen ist, und die für diese Druckluftmenge erforderliche Regenerationsluftmenge für den Trockner zum Erreichen des gewünschten Taupunkts in Abhängigkeit von der Umgebungstemperatur und/oder der Feuchtigkeit der angesaugten Luft ermittelt und die Regeneration des Trockners mit dieser Regenerationsluftmenge durchgeführt wird.

Da Luft mit hohen Temperaturen, beispielsweise bei +40°C, wesentlich mehr Wasser aufnehmen kann als bei +20°C oder -10°C, wird bei gleicher geförderter Luftmenge bei hohen Temperaturen mehr Wasser im Trockner zwischengelagert als bei niedrigen Temperaturen. Um dieses während der Regeneration wieder zu entfernen, muss bei hohen Temperaturen mehr trockene Luft zur Regeneration eingesetzt werden. Eine Regeneration wird somit immer erst dann eingeleitet, wenn soviel Druckluft durch den Trockner geleitet ist, dass er als gesättigt anzusehen ist, dass dann aber die erforderliche Regenerationsluftmenge in Abhängigkeit von der Umgebungstemperatur und/oder der Feuchtigkeit der angesaugten Luft ermittelt und die Regeneration des Trockners mit dieser Regenerationsluftmenge durchgeführt wird.

Dadurch ist einerseits sichergestellt, dass genügend Regenerationsluftmenge zur Verfügung gestellt wird, auch dann, wenn tatsächlich Luft mit der höchstmöglichen Umgebungstemperatur und Feuchtigkeit durch den Kompressor angesaugt und durch den Lufttrockner gefördert wurde, so dass dieser tatsächlich gesättigt ist, dass aber bei niedrigerer Umgebungstemperatur und/oder Feuchtigkeit der angesaugten Luft eine entsprechend geringere Regenerationsluftmenge durch den Trockner geleitet wird.

Gemäß einer Weiterbildung der Erfindung nach Anspruch 2 ist vorgesehen, dass bei Verwendung der Umgebungstemperatur zum Ermitteln der Regenerationsluftmenge der bei der herrschenden Umgebungstemperatur mögliche Maximalwert der Luftfeuchtigkeit bei der Ermittlung der Regnerationsluftmenge zugrunde gelegt wird. Der Vorteil dieser Weiterbildung ist darin zu sehen, dass nur ein Temperatursensor benötigt wird, da der bei der jeweiligen Temperatur mögliche Maximalwert der Luftfeuchtigkeit bekannt ist und im Steuergerät gespeichert sein kann.

Gemäß einer anderen Weiterbildung der Erfindung nach Anspruch 3 ist vorgesehen, dass bei Verwendung eines Feuchtesensors zum Ermitteln der Regenerationsluftmenge der direkt gemessene Feuchtigkeitsgehalt der Luft bei der Ermittlung der Regerationsluftmenge zugrunde gelegt wird. Der Vorteil der Weiterbildung gemäß Anspruch 3 ist analog zum Vorteil gemäß der Weiterbildung gemäß Anspruch 2, da nur ein Feuchtesensor erforderlich ist.

Selbstverständlich ist es auch möglich, sowohl die Umgebungstemperatur als auch die Feuchtigkeit der angesaugten Luft zu messen, woraus sich dann direkt die Regenerationsluftmenge festlegen lässt.

Gemäß einer Weiterbildung der Erfindung nach Anspruch 4 kann die ermittelte Regenerationsluftmenge zeitgesteuert vom Druckluftvorratsbehälter aus durch den Trockner geführt werden, wobei die Ablasszeit in Abhängigkeit vom aktuellen Speicherdruck bestimmt wird. Der Vorteil der Weiterbildung gemäß Anspruch 4 ist darin zu sehen, dass die erforderliche Regenerationsluftmenge immer durch den Trockner fließt, auch wenn sich der Druck im Druckluftvorratsbehälter ändert.

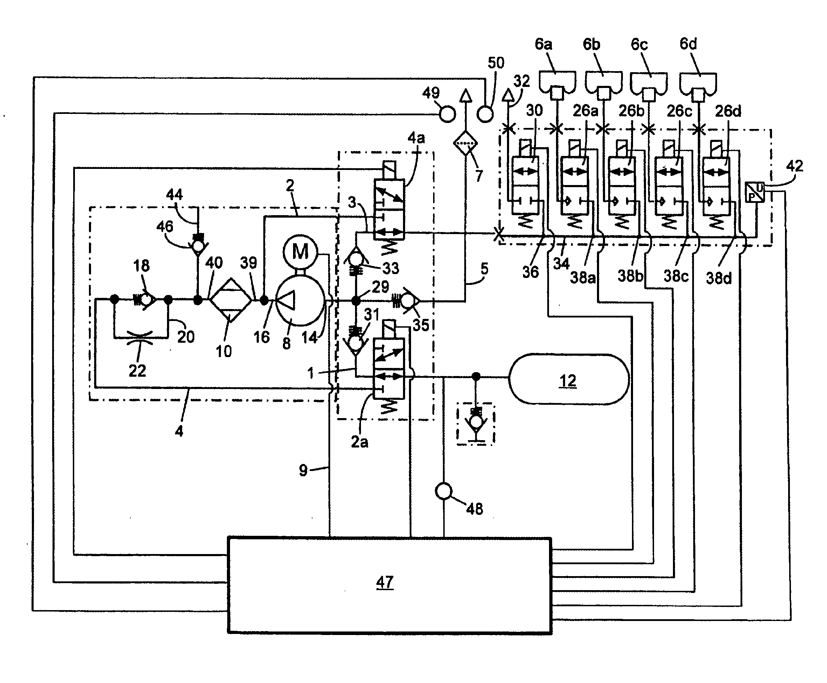

Die Erfindung wird nachstehend anhand eines in der Zeichnung dargestellten Ausführungsbeispiels des Näheren erläutert.

Die einzige **Figur** zeigt ein pneumatisches Schaltschema der erfindungsgemäßen, geschlossenen Niveauregelanlage in schematischer Darstellung, die mit Druckluft betrieben wird und die Druckmittelkammern in Form von Luftfedern 6a bis 6d, einen Kompressor 8, einen Lufttrockner 10 und einen Druckmittelvorratsbehälter 12 enthält. Der Druckmittelvorratsbehälter 12 steht über eine erste Druckmittelleitung 1, die über ein erstes 3/2-Wegeventil 2a und ein Rückschlagventil 31 geführt ist, mit einem Kompressoreingang 14 sowie über das steuerbare 3/2-Wegeventil 2a und eine vierte Druckmittelleitung 4, in der ein Rückschlagventil 18 und der Lufttrockner 10 angeordnet sind, mit einem Kompressorausgang 16 in Verbindung. Das Rückschlagventil 18 ist so angeordnet, dass es zum Druckmittelvorratsbehälter 12 hin öffnet.

Parallel zum Rückschlagventil 18 verläuft eine Druckluftleitung 20, die über eine Drossel 22 zum Lufttrocknerausgang 40 geführt ist. Der Luftrocknereingang 39 ist über eine zweite Druckluftleitung 2 mit einem weiteren 3/2-Wegeventil 4a verbunden, das über eine dritte Druckluftleitung 3 und ein Rückschlagventil 33 mit einem Punkt 29 verbunden ist, in dem die erste Druckluftleitung 1 und die dritte Druckluftleitung 3 zusammengeführt sind, von wo eine Verbindung zum Kompressoreingang 14 besteht.

Die Rückschlagventile 31 und 33 sind so angeordnet, dass sie in Richtung zum Kompressoreingang 14 öffnen.

Das 3/2-Wegeventil 4a ist des Weiteren mit einer Druckmittelleitung 34 verbunden, die über Abzweigungen 28a bis 38d und 2/2-Wegeventile 26a bis 26d mit den Luftfedern 6a bis 6d verbindbar ist.

Von einem Punkt 36 zweigt eine Druckluftleitung 32 ab, in der ein 2/2-Wegeventil 30 angeordnet ist, und durch die wahlweise Luft aus der Atmosphäre angesogen und abgelassen werden kann.

Zum Kompressoreingang 14 ist noch eine Ansaugleitung 5 geführt, in der ein Luftfilter 7 und ein sich zum Kompressoreingang 14 öffnendes Rückschlagventil 35 angeordnet sind.

Ein Steuergerät 47 ist mit einem Drucksensor 48 verbunden, der den aktuellen Speicherdruck des Druckluftvorratsbehälters 12 bestimmt. Ein in der Ansaugleitung 5 angeordneter Lufttemperatursensor 49 und ein dort angeordneter Luftfeuchtigkeitssensor 50 sind ebenfalls mit dem Steuergerät 47 verbunden. Ein weiterer Drucksensor 42 ist an die Druckluftleitung 34 angeschlossen und erlaubt es, den in den einzelnen Druckluftkammern 6a bis 6d herrschenden Luftdruck bei entsprechender Betätigung der 2/2-Wegeventile 26a bis 26d zu messen und an das Steuergerät 47 zu leiten.

Ein als Motor M bezeichneter Antrieb 9 für den Kompressor 8 und die 3/2-Wegeventile 2a, 34a, sowie die 2/2-Wegeventile 26a bis 26d und 30 sind mittels Steuerleitungen ebenfalls mit dem Steuergerät 47 verbunden.

Zum Füllen der Niveauregelanlage mit Druckluft wird der Kompressor 8 über die Steuerleitung 9 durch das Steuergerät 47 in Tätigkeit gesetzt, saugt Luft durch den Ansaugfilter 7, die Ansaugleitung 5 und das Rückschlagventil 35 an und fördert diese durch den Lufttrockner 10 über das Rückschlagventil 18 und die Druckluftleitung 4 sowie das 3/2-Wegeventil 2a in den Druckluftvorratsbehälter 12.

Anschließend fördert der Kompressor 10 getrocknete Druckluft aus dem Druckvorratsbehälter 12 über das 3/2-Wegeventil 2a, das Rückschlagventil 31, die Druckluftleitung 2, das 3/2-Wegeventil 4a und die Druckluftleitung 34 zu den Abzweigungen 38a - 38d und von dort über die 2/2-Wegeventile 26a - 26d in die Druckluftkammern 6a bis 6d. Da dadurch der Druck im Druckluftvorratsbehälter 12 absinkt, wird anschließend erneut Druckluft über die Druckluftleitung 5 angesaugt, durch den Kompressor 8 komprimiert, im Lufttrockner 10 getrocknet und in den Druckluftvorratsbehälter 12 gefördert, bis der durch den Drucksensor 48 gemessene Solldruck erreicht ist.

Die Temperatur der angesaugten Luft wird durch den Lufttemperatursensor 49, und die Luftfeuchtigkeit wird durch den Luftfeuchtigkeitssensor 50 gemessen und an das Steuergerät 47 geleitet. Des Weiteren wird auch die in die Niveauregelanlage geförderte Luftmenge gemessen, was beispielsweise dadurch geschehen kann, dass die Anzahl der Umdrehungen des Kompressors 8 gezählt werden, da diese in einem festen Verhältnis zur durch den Kompressor 8 geförderten Luftmenge stehen. Die tatsächlich in die Niveauregelanlage gelangte Druckluft ergibt sich dann aus der Anzahl der Motorumdrehungen, der gemessenen Lufttemperatur und der gemessenen Luftfeuchtigkeit.

Während des Betriebes der Niveauregelanlage wird Druckluft zwischen den Druckluftkammern 6a bis 6d und dem Druckluftvorratsbehälter 12 hin und her befördert, um die Fahrtzustände zu berücksichtigen. Diese Funktionsweise ist beispielsweise in der EP 1 243 447 A2 beschrieben.

Da das Gesamtvolumen der Druckregelanlage einen festen Wert hat, erhöht sich der in der Druckregelanlage herrschende Druck bei steigenden Temperaturen und sinkt bei niedrigen Temperaturen. Dies bedeutet, dass bei steigenden Temperaturen Druckluft aus dem System über das 2/2-Wegeventil 30 und die Druckluftleitung 32 abgelassen werden muss und bei sinkenden Temperaturen über die Ansaugleitung 5 und den Kompressor 8 wieder ersetzt werden muss. Des Weiteren sind auch Leckageverluste zu verzeichnen, die ebenfalls ersetzt werden müssen.

Bei jedem Ablassen von Druckluft aus der Niveauregelanlage durchströmt diese den Trockner 10 und dient zu dessen Regenerierung.

Unabhängig von wegen Druckschwankungen erforderlichem Druckluftauslass ist eine intensive Regenerierung des Lufttrockners 10 von Zeit zu Zeit erforderlich, wenn nämlich der Lufttrockner 10 mit Feuchtigkeit gesättigt ist.

Erfindungsgemäß wird die Sättigung des Lufttrockners 10 angenommen, wenn eine Druckluftmenge in die Niveauregelanlage hineingefördert wurde, die bei einem angenommenen Maximalwert der Temperatur und einem angenommenen Maximalwert der Feuchtigkeit zur Sättigung des Lufttrockners 10 führt. Das Steuergerät 47 ermittelt aus der gemessenen Temperatur und/oder der Feuchtigkeit der aus der Atmosphäre angesaugten Luft die dann erforderliche Regenerationsluftmenge für den Trockner 10 und schaltet einen Regenerationszyklus ein, während dem das 3/2-Wegeventil 2a auf Durchlass zur Druckluftleitung 4 und das 3/2-Wegeventil 4a auf Durchlass von der Druckluftleitung 2 zur Druckluftleitung 34 geschaltet werden und bei dem das 2/2-Wegeventil 30 geöffnet ist, so dass die Regenerationsluft über die Druckluftleitung 32 in die Atmosphäre entweichen kann. Die durch den Trockner 10 fließende Regenerationsluft wird in der Drossel 22 gedrosselt, wobei durch das Entspannen der Druckluft infolge der Drosselwirkung eine verbesserte Regenerationswirkung des in dem Lufttrockner 10 befindlichen Trocknergranulats erreicht wird, d.h. es wird mit relativ wenig Druckluftverbrauch eine relativ hohe Trocknungswirkung erzielt.

Da im Druckluftvorratsbehälter 12 nicht stets der maximale Solldruck herrscht, wird die durch das Steuergerät 47 ermittelte Regenerationsluftmenge zeitgesteuert aus dem Druckluftvorratsbehälter 12 durch den Trockner 10 geführt, wobei die Ablasszeit in Abhängigkeit vom aktuellen Speicherdruck variiert wird.

Zu erwähnen ist noch, dass am Lufttrocknerausgang 40 eine Druckluftleitung 44 für einen externen Anschluss vorhanden ist, die zum Lufttrocknerausgang 40 hin durch ein Rückschlagventil 46 gesperrt ist.

Durch das erfindungsgemäße Verfahren zum Steuern der Regenerationszyklen für den Lufttrockner 10 lässt sich ein minimaler Regenerationsluftmengenverbrauch erreichen, so dass eine maximale Luftmenge im System verbleibt und die Funktion der Niveauregelanlage durch die Regenerationszyklen nicht beeinträchtigt wird.

### Bezugszeichenliste

- 1: 1. Druckluftleitung
- 2: 2. Druckluftleitung
- 3: 3. Druckluftleitung
- 4: 4. Druckluftleitung
- 2a: 3/2-Wegeventil
- 4a: 3/2-Wegeventil
- 5: Ansaugleitung
- 6a-6d: Druckluftkammern, Luftfedern
- 7: Ansaugfilter
- 8: Kompressor
- 9: Steuerleitung
- 10: Lufttrockner
- 12: Druckluftvorratsbehälter
- 14: Kompressoreingang
- 16: Kompressorausgang
- 18: Rückschlagventil
- 20: Druckluftleitung
- 22: Drossel
- 26a-26d: 2/2-Wegeventile
- 29: Punkt
- 30: 2/2-Wegeventil
- 31 1: Rückschlagventil
- 32: Druckluftleitung
- 33: Rückschlagventil
- 34: Druckluftleitung
- 35: Rückschlagventil
- 36: Punkt
- 38a-38d: Abzweigungen
- 39: Lufttrocknereingang
- 40: Lufttrocknerausgang
- 42: Drucksensor
- 44: Druckluftleitung für externen Anschluss
- 46: Rückschlagventil
- 47: Steuergerät
- 48: Drucksensor
- 49: Lufttemperatursensor
- 50: Luftfeuchtigkeitssensor

## Patentansprüche

1. Verfahren zum Steuern der Regenerationszyklen für einen Lufttrockner (10) in einer geschlossenen Niveauregelanlage für Fahrzeuge, durch die ein Fahrzeugaufbau gegenüber mindestens einer Fahrzeugachse abgefedert ist, mit Druckluftkammern (6a - 6d), die über Abzweigungen (38a - 38d) mit einer Druckluftleitung (34) verbunden sind, einem Kompressor (8), einem Lufttrockner (10), der in einer Luftdruckleitung (4) zu einem Druckluftvorratsbehälter (12) angeordnet ist, der (12) mit den Druckluftkammern (6a - 6d) derart in Verbindung steht, dass Druckluft aus dem Druckluftvorratsbehälter (12) in jede Druckluftkammer (6a - 6d) überführbar ist, Druckluft aus jeder Druckluftkammer (6a - 6d) in den Druckluftvorratsbehälter (12) überführbar ist, wobei die Druckluftkammern (6a - 6d) und der Druckluftvorratsbehälter (12) über eine mit der Atmosphäre verbindbare Druckluftleitung (32) mit Druckluft auffüllbar und entlüftbar sind, oder über eine mit dem Kompressor (8) verbundene Druckluftansaugleitung (5) auffüllbar und über die Druckluftleitung (32) entlüftbar sind, **dadurch gekennzeichnet, dass** die Druckluftmenge, die mittels des Kompressors (8) durch den Trockner (10) gefördert wird, gemessen wird, dass die Temperatur und/oder die Feuchtigkeit der aus der Atmosphäre angesaugten Luft gemessen wird, dass immer so viel Druckluft durch den Trockner (10) geleitet wird, dass dieser unter der Annahme, dass die Luft mit der höchstmöglichen Umgebungstemperatur und Feuchtigkeit durch den Kompressor (8) angesaugt und durch den Lufttrockner (10) gefördert wird, als gesättigt anzusehen ist, und dass die für diese Druckluftmenge erforderliche Regenerationsluftmenge für den Trockner (10) zum Erreichen des gewünschten Taupunkts in Abhängigkeit von der Umgebungstemperatur und/oder der Feuchtigkeit der angesaugten Luft ermittelt und die Regeneration des Trockners (10) mit dieser Regenerationsluftmenge durchgeführt wird.

2. Verfahren nach Anspruch 1, **dadurch gekennzeichnet, dass** bei Verwendung der Umgebungstemperatur zum Ermitteln der Regenerationsluftmenge der bei der herrschenden Umgebungstemperatur mögliche Maximalwert der Luftfeuchtigkeit bei der Ermittlung der Regenerationsluftmenge zugrunde gelegt wird.

3. Verfahren nach Anspruch 1, **dadurch gekennzeichnet, dass** bei Verwendung eines Luftfcuchtigkeitssensors (50) zum Ermitteln der Regenerationsluftmenge der direkt gemessen Feuchtigkeitsgehalt bei der Ermittlung der Regenerationsluftmenge zugrunde gelegt wird.

4. Verfahren nach einem der Ansprüche 1 bis 3, **dadurch gekennzeichnet, dass** die Regenerationsluftmenge zeitgesteuert aus dem Druckluftvorratsbehälter (12) durch den Trockner (10) geführt wird und die Ablasszeit in Abhängigkeit vom aktuellen Speicherdruck bestimmt wird.

## Claims

1. Method for controlling the regeneration cycles for an air dryer (10) in a closed ride height control system for vehicles, by means of which ride height control system a vehicle body is suspended relative to at least one vehicle axle, having compressed air chambers (6a - 6d) which are connected via branches (38a - 38d) to a compressed air line (34), having a compressor (8), and having an air dryer (10) which is arranged in an air pressure line (4) to a compressed air storage reservoir (12) which (12) is connected to the compressed air chambers (6a - 6d) in such a way that compressed air from the compressed air storage reservoir (12) can be transferred into each compressed air chamber (6a - 6d), and compressed air from each compressed air chamber (6a - 6d) can be transferred into the compressed air storage reservoir (12), it being possible for the compressed air chambers (6a - 6d) and the compressed air storage reservoir (12) to be charged with compressed air and ventilated via a compressed air line (32) which can be connected to the atmosphere, or to be charged via a compressed air intake line (5) connected to the compressor (8) and ventilated via the compressed air line (32), **characterized in that** the compressed air quantity delivered through the dryer (10) by means of the compressor (8) is measured, **in that** the temperature and/or the humidity of the air sucked in from the atmosphere is measured, **in that** through the dryer (10) there is always conducted an amount of compressed air such that the said dryer can be regarded as being saturated under the assumption that the air is sucked in by the compressor (8) and delivered through the air dryer (10) at the highest possible ambient temperature and humidity, and **in that** the regeneration air quantity required for said compressed air quantity for the dryer (10) to attain the desired dew point is determined as a function of the ambient temperature and/or the humidity of the intake air, and the regeneration of the dryer (10) is carried out with said regeneration air quantity.

2. Method according to Claim 1, **characterized in that**, in the case of the ambient temperature being used to determine the regeneration air quantity, the maximum possible value of the air humidity at the prevailing ambient temperature is used as a basis for the determination of the regeneration air quantity.

3. Method according to Claim 1, **characterized in that**, in the case of an air humidity sensor (50) being used to determine the regeneration air quantity, the directly measured humidity content is used as a basis for the determination of the regeneration air quantity.

4. Method according to one of Claims 1 to 3, **characterized in that** the regeneration air quantity is conducted from the compressed air storage reservoir (12) through the dryer (10) in a time-controlled manner, and the discharge time is determined as a function of the present storage pressure.

## Revendications

1. Procédé de commande des cycles de régénération pour un sécheur d'air (10) dans un système fermé régulateur de niveau pour véhicules, au moyen duquel une carrosserie peut être suspendue par rapport à au moins un essieu de véhicule, avec des compartiments d'air comprimé (6a - 6d) reliés à une conduite d'air comprimé (34) via des dérivations (38a - 38d), un compresseur (8), un sécheur d'air (10) disposé dans une conduite d'air comprimé (4) conduisant un réservoir d'air comprimé (12), ledit réservoir (12) étant relié aux compartiments d'air comprimé (6a - 6d) de telle sorte que l'air comprimé provenant du réservoir d'air comprimé (12) peut être transporté dans chaque compartiment d'air comprimé (6a - 6d), l'air comprimé sortant de chaque compartiment d'air comprimé (6a - 6d) pouvant être ramené dans le réservoir d'air comprimé (12), les compartiments d'air comprimé (6a - 6d) et le réservoir d'air comprimé (12) pouvant être remplis et purgés d'air comprimé par l'intermédiaire d'une conduite d'air comprimé (32) pouvant être reliée à l'atmosphère, ou peuvent être remplis par le biais d'une conduite d'aspiration d'air comprimé (5) reliée au compresseur (8) et être purgés par le biais de la conduite d'air comprimé (32), **caractérisé en ce que** la quantité d'air comprimé transportée par le sécheur (10) à l'aide du compresseur (8) est mesurée, que la température et/ou l'humidité de l'air aspiré dans l'atmosphère est mesurée, qu'une quantité toujours égale d'air comprimé est conduite à travers le sécheur (10), que l'air aspiré par le compresseur (8) est toujours à la température ambiante et à l'humidité les plus importantes possible et est transporté à travers le sécheur d'air (10), considéré comme saturé, et que la quantité d'air de régénération nécessaire au sécheur (10) pour cette quantité d'air comprimé est calculée pour atteindre le point de rosée souhaité en fonction de la température ambiante et/ou de l'humidité de l'air aspiré et que la régénération du sécheur (10) est réalisée avec cette quantité d'air de régénération.

2. Procédé selon la revendication 1, **caractérisé en ce que** lors de l'utilisation de la température ambiante pour calculer la quantité d'air de régénération, la valeur maximale de l'humidité de l'air possible à la température ambiante en présence sert de base au calcul de la quantité d'air de régénération.

3. Procédé selon la revendication 1, **caractérisé en ce que** lors de l'utilisation d'un capteur d'humidité d'air (50) pour calculer la quantité d'air de régénération, la teneur en humidité directement mesurée sert de base au calcul de la quantité d'air de régénération.

4. Procédé selon l'une quelconque des revendications 1 à 3, **caractérisé en ce que** la quantité d'air de régénération est conduite de façon commandée dans le temps à travers le sécheur (10) en sortant du réservoir d'air comprimé (12) et que le temps de purge est défini en fonction de la pression régnant à ce moment précis dans l'accumulateur.
